(19) Europäisches Patentamt
European Patent Office
Office européen des brevets

(11) EP 4 421 028 A1

(12) EUROPEAN PATENT APPLICATION
published in accordance with Art. 153(4) EPC

(43) Date of publication:
**28.08.2024 Bulletin 2024/35**

(21) Application number: **23837535.6**

(22) Date of filing: **29.06.2023**

(51) International Patent Classification (IPC):
***C01B 21/072*** *(2006.01)* ***C08K 9/06*** *(2006.01)*

(52) Cooperative Patent Classification (CPC):
**C01B 21/072; C08K 9/06**

(86) International application number:
**PCT/JP2023/024097**

(87) International publication number:
**WO 2024/127697 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2022 JP 2022201239**

(71) Applicant: **RESONAC CORPORATION**
**Tokyo 105-7325 (JP)**

(72) Inventors:
- **KOBAYASHI, Ikue**
  **Minato-ku,**
  **Tokyo 105-7325 (JP)**
- **MINORIKAWA, Naoki**
  **Minato-ku,**
  **Tokyo 105-7325 (JP)**
- **SUGIMOTO, Hiroki**
  **Minato-ku,**
  **Tokyo 105-7325 (JP)**

(74) Representative: **Strehl Schübel-Hopf & Partner**
**Maximilianstrasse 54**
**80538 München (DE)**

# (54) METHOD FOR MANUFACTURING SILICON-CONTAINING OXIDE-COATED ALUMINUM NITRIDE PARTICLES

(57) To provide a method for producing a silicon-containing oxide-coated aluminum nitride particle enabling the production of silicon-containing oxide-coated aluminum nitride particles that maintain the high thermal conductivity of aluminum nitride particles, have excellent moisture resistance, and do not easily aggregate. A method for producing a silicon-containing oxide-coated aluminum nitride particle including an aluminum nitride particle and a silicon-containing oxide film that covers a surface of the aluminum nitride particle, the method having a first step of vapor-depositing an organic silicone compound including a specific structure on the surface of the aluminum nitride particle to obtain the aluminum nitride particle covered with the organic silicone compound and a second step of heating the aluminum nitride particle covered with the organic silicone compound at a temperature of 300°C or higher and lower than 1000°C, wherein the first step is performed under a nitrogen atmosphere, and a partial pressure of the organic silicone compound in the nitrogen atmosphere is $2.6 \times 10^2$ to $3.9 \times 10^3$ Pa.

EP 4 421 028 A1

## Description

### Technical Field

The present invention relates to a method for producing a silicon-containing oxide-coated aluminum nitride particle.

### Background Art

Aluminum nitride is highly thermally conductive and has excellent electrical insulating properties. Therefore, aluminum nitride is promising as a filler for resin compositions that are used for products such as heat dissipation sheets and sealing materials for electronic components. However, aluminum nitride is hydrolyzed by a reaction with moisture and modified into poorly thermally conductive aluminum hydroxide. In addition, aluminum nitride also generates corrosive ammonia upon hydrolysis.

The hydrolysis of aluminum nitride also proceeds due to moisture in the atmosphere. Therefore, under high temperature and high moisture conditions, products to which aluminum nitride has been added do not only degrade moisture resistance and thermal conductivity but also cause corrosion attributed to ammonia generated by the hydrolysis of aluminum nitride, which is a concern of performance degradation.

As a technique for improving the moisture resistance of aluminum nitride, for example, there has been a proposal of a method for producing a silicon-containing oxide-coated aluminum nitride particle including an aluminum nitride particle and a silicon-containing oxide film that covers the surface of the aluminum nitride particle, the method including a first step of covering the surface of the aluminum nitride particle with a silicone compound having a specific structure and a second step of heating the aluminum nitride particle covered with the organic silicon compound at a specific temperature (for example, refer to Patent Literature 1 and 2).

### Citation List

#### Patent Literature

PTL1: WO 2020/040309

PTL2: JP 2021-075435 A

### Summary of Invention

#### Technical Problem

In the production method described in Patent Literature 1 and 2, silicon-containing oxide-coated aluminum nitride particles to be obtained aggregate in some cases, and there is a problem in that the aggregation of the silicon-containing oxide-coated aluminum nitride particles degrades the properties of filling a variety of materials. In addition, when the aggregated silicon-containing oxide-coated aluminum nitride particles are crushed to prepare a composition, the silicon-containing oxide films covering the surfaces of the aluminum nitride particles peel off, which creates a problem of the degradation of the moisture resistance of the composition.

The present invention has been made in consideration of such circumstances, and an objective of the present invention is to provide a method for producing a silicon-containing oxide-coated aluminum nitride particle enabling the production of silicon-containing oxide-coated aluminum nitride particles that maintain the high thermal conductivity of aluminum nitride particles, have excellent moisture resistance, and do not easily aggregate.

#### Solution to Problem

As a result of intensive studies, the present inventors found that the above-described problems can be solved by coating aluminum nitride particles by a specific method using a specific organic silicone compound and completed the present invention. That is, the present invention has the following configurations.

[1] A method for producing a silicon-containing oxide-coated aluminum nitride particle including an aluminum nitride

particle and a silicon-containing oxide film that covers a surface of the aluminum nitride particle, the method having

a first step of vapor-depositing an organic silicone compound including a structure represented by the following formula (1) on the surface of the aluminum nitride particle to obtain the aluminum nitride particle covered with the organic silicone compound; and
a second step of heating the aluminum nitride particle covered with the organic silicone compound at a temperature of 300°C or higher and lower than 1000°C,
wherein the first step is performed under a nitrogen atmosphere, and a partial pressure of the organic silicone compound in the nitrogen atmosphere is $2.6 \times 10^2$ to $3.9 \times 10^3$ Pa.

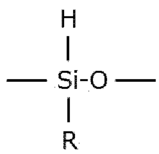 · · · (1)

Wherein, in the formula (1), R is an alkyl group having 1 to 4 carbon atoms.

[2] The method for producing a silicon-containing oxide-coated aluminum nitride particle according to [1], wherein a change rate of a particle size distribution width ($P_2$) of the silicon-containing oxide-coated aluminum nitride particle with respect to a particle size distribution width ($P_1$) of the aluminum nitride particle that is calculated by the following formula (I) is 10% or less.
[Math. 1]

$$\text{Change rate (\%) of particle size distribution width} = \left( \frac{P_2}{P_1} - 1 \right) \times 100 \qquad (\mathrm{I})$$

$$\text{Particle size distribution width } (P_1) = \frac{D90 - D10}{D50}$$

$$\text{Particle size distribution width } (P_2) = \frac{D90 - D10}{D50}$$

wherein, in $P_1$ and $P_2$, D90 is a cumulative volume 90% particle diameter of the particle, D50 is a cumulative volume 50% particle diameter of the particle, and D 10 is a cumulative volume 10% particle diameter of the particle.
[3] The method for producing a silicon-containing oxide-coated aluminum nitride particle according to [1] or [2], wherein the first step is performed by a gas-phase adsorption method.
[4] The method for producing a silicon-containing oxide-coated aluminum nitride particle according to any one of [1] to [3], wherein the organic silicone compound including the structure represented by the formula (1) includes at least one of a compound represented by the following formula (2) and a compound represented by the following formula (3).

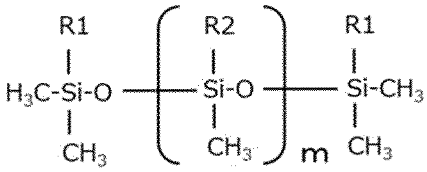 · · · (2)

Wherein, in the formula (2), R1 and R2 are each independently a hydrogen atom or a methyl group, at least one of R1 and R2 is a hydrogen atom, and m is an integer of 0 to 10.

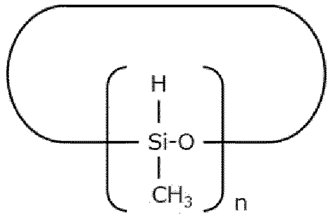

・・・(3)

Wherein, in the formula (3), n is an integer of 3 to 6.

[5] The method for producing a silicon-containing oxide-coated aluminum nitride particle according to any one of [1] to [4], wherein the first step is performed under a temperature condition of 30°C to 200°C.

Advantageous Effect of Invention

According to the present invention, it is possible to provide a method for producing a silicon-containing oxide-coated aluminum nitride particle enabling the production of silicon-containing oxide-coated aluminum nitride particles that maintain the high thermal conductivity of aluminum nitride particles, have excellent moisture resistance, and do not easily aggregate.

Description of Embodiment

Hereinafter, the present invention will be described in detail.

An aspect for which a matter described in the present specification is arbitrarily selected or an aspect for which matters described in the present specification are arbitrarily combined are also included in the present invention.

In the present specification, a regulation considered to be preferable can be arbitrarily selected, and a combination of regulations considered to be preferable can be said to be more preferable.

In the present specification, an expression "XX to YY" means "XX or more and YY or less."

In the present specification, lower limit values and upper limit values described stepwise regarding preferable numerical ranges (for example, the ranges of the content or the like) can be each independently combined. For example, from a description "preferably 10 to 90 and more preferably 30 to 60", a range of " 10 to 60" can also be formed by combining "the preferable lower limit value (10)" and "the more preferable upper limit value (60)."

In the present specification, "cumulative volume 90% particle diameter (D90)" indicates a particle diameter at which the cumulative value of volume accumulation reaches 90% in a certain particle size distribution, "cumulative volume 50% particle diameter (D50)" indicates a particle diameter at which the cumulative value of volume accumulation reaches 50% in a certain particle size distribution, and "cumulative volume 10% particle diameter (D10)" indicates a particle diameter at which the cumulative value of volume accumulation reaches 10% in a certain particle size distribution. D90, D50 and D10 are all obtained from a particle size distribution obtained by a laser diffraction and scattering method. Specifically, D90, D50 and D10 can be measured using a laser diffraction and scattering-type particle size distribution analyzer (manufactured by MicrotracBEL Corporation, "MICROTRAC MT3300EX2").

<Method for Producing Silicon-Containing Oxide-Coated Aluminum Nitride Particle>

A method for producing a silicon-containing oxide-coated aluminum nitride particle of the present invention is a method for producing a silicon-containing oxide-coated aluminum nitride particle including an aluminum nitride particle and a silicon-containing oxide film that covers the surface of this aluminum nitride particle. Examples of "silicon-containing oxide" of the silicon-containing oxide film and the silicon-containing oxide-coated aluminum nitride particle include silica and composite oxides of a silicon element and an aluminum element, which will be described in detail below. Oxides include oxides, oxynitrides, oxycarbonitrides and the like.

In addition, the method for producing a silicon-containing oxide-coated aluminum nitride particle of the present invention has a first step of vapor-depositing an organic silicone compound including a structure represented by the following formula (1) on the surface of the aluminum nitride particle to obtain the aluminum nitride particle covered with the organic silicone compound and a second step of heating the aluminum nitride particle covered with the organic silicone compound at a temperature of 300°C or higher and lower than 1000°C, the first step is performed under a nitrogen atmosphere, and the partial pressure of the organic silicone compound in the nitrogen atmosphere is $2.6 \times 10^2$ to $3.9 \times 10^3$ Pa.

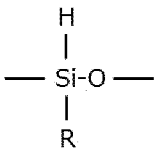

・・・(1)

wherein, in the formula (1), R is an alkyl group having 1 to 4 carbon atoms.

[First Step]

In the present step, an organic silicone compound including a structure represented by the formula (1) is vapor-deposited on the surface of the aluminum nitride particle to obtain the aluminum nitride particle covered with the organic silicone compound.

<Aluminum Nitride Particle>

In the method for producing a silicon-containing oxide-coated aluminum nitride particle of the present invention, as the aluminum nitride particle, which is used as a raw material, a well-known particle such as a commercially available product can be used. A method for producing the aluminum nitride particle is not particularly limited, and examples thereof include a direct nitriding method in which a metallic aluminum powder and nitrogen or ammonia are directly reacted, a reduction nitriding method in which alumina is heated under a nitrogen or ammonia atmosphere while being carbon-reduced to perform a nitriding reaction at the same time, and the like.

In addition, as the aluminum nitride particle, it is possible to use particles granulated by the sintering of aggregates of aluminum nitride particles, and it is possible to preferably use, for example, sintered granules for which high-purity aluminum nitride particles are used as a raw material.

Here, the high-purity aluminum nitride particles refer to particles having a low oxygen content and containing a small amount of metallic impurity. Specifically, for example, high-purity aluminum nitride particles having an oxygen content of 1 mass% or less and having a total content of metallic impurities (that is, metal atoms other than aluminum) of 1000 mass ppm or less are preferable in order to obtain higher thermal conductivity of the aluminum nitride particles that are included in the silicon-containing oxide-coated aluminum nitride particles.

The aluminum nitride particles can be used singly or in combination.

The above-described oxygen content can be measured with an inorganic analyzer or the like accompanying an infrared detector for oxygen detection. Specifically, the oxygen content can be measured using an oxygen/nitrogen/hydrogen analyzer (manufactured by LECO Japan Corporation, "ONH836").

In addition, the total content of metal atoms other than aluminum can be measured with an inductively coupled plasma (ICP) mass spectrometer or the like. Specifically, the total content of metal atoms other than aluminum can be measured using an ICP mass spectrometer (manufactured by Shimadzu Corporation, "ICPMS-2030").

The shape of the aluminum nitride particle that is used in the present invention is not particularly limited, and examples thereof include an irregular shape (crushed shape), a spherical shape, an elliptical shape, a plate shape (scale shape) and the like. In addition, in a case where the silicon-containing oxide-coated aluminum nitride particles are dispersed and contained in a resin composition as a filler, as the aluminum nitride particles, the same kind of aluminum nitride particles having the same shape and structure (single substance) alone may be used, but it is also possible to use a mixture of two or more kinds of dissimilar aluminum nitride particles having different shapes and structures mixed in a variety of proportions.

In a case where the silicon-containing oxide-coated aluminum nitride particles are dispersed and contained in a resin composition, as the volume ratio (filling amount) of the aluminum nitride particles configuring the silicon-containing oxide-coated aluminum nitride particles to the resin composition becomes larger, the thermal conductivity of the resin composition becomes higher. Therefore, the shape of the aluminum nitride particle is preferably close to a spherical shape that increases the viscosity of the resin composition by the addition of the silicon-containing oxide-coated aluminum nitride particles to a small extent.

The cumulative volume 50% particle diameter (D50) of the aluminum nitride particles that are used in the present invention is not particularly limited, but is preferably 0.5 μm or more, more preferably 0.5 μm or more and 200.0 μm or less, still more preferably 0.8 μm or more and 100.0 μm or less and particularly preferably 1.0 μm or more and 80.0 μm or less.

When D50 of the aluminum nitride particles is within the above-described range, even in a case where a resin composition containing the silicon-containing oxide-coated aluminum nitride particles is used for a heat dissipation material on which a power system electronic component is mounted, it is possible to supply a thin heat dissipation material having a minimum thickness, and it is easy for films to uniformly coat the surfaces of the aluminum nitride

particles, and thus the moisture resistance of the aluminum nitride particles further improves.

<Organic Silicone Compound Used for films>

In the method for producing a silicon-containing oxide-coated aluminum nitride particle of the present invention, the organic silicone compound that is used as a raw material of the silicon-containing oxide films configuring the silicon-containing oxide-coated aluminum nitride particles can be used with no particular limitations as long as the organic silicone compound includes the structure represented by the formula (1) regardless of a linear, cyclic or branched form. The structure represented by the formula (1) is a hydrogen siloxane unit in which hydrogen directly bonds to a silicon atom.
In the formula (1), R, which is an alkyl group having 1 to 4 carbon atoms, is preferably a methyl group, an ethyl group, a propyl group, a t-butyl group or the like and particularly preferably a methyl group from the viewpoint of volatilizing the silicone compound. In the method for producing a silicon-containing oxide-coated aluminum nitride particle of the present invention, the organic silicone compound that is used as a raw material is, for example, an oligomer or polymer including the structure represented by the formula (1).
As the organic silicone compound, for example, at least one of a compound represented by the following formula (2) and a compound represented by the following formula (3) is preferable.

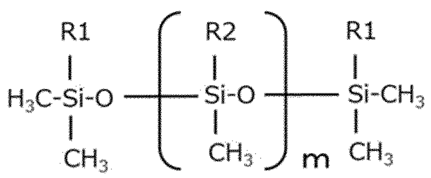

・・・(2)

Wherein, in the formula (2), R1 and R2 are each independently a hydrogen atom or a methyl group, at least one of R1 and R2 is a hydrogen atom, and m is an integer of 0 to 10.

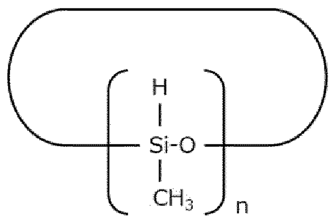

・・・(3)

Wherein, in the formula (3), n is an integer of 3 to 6.
Particularly, a cyclic hydrogen siloxane oligomer for which n in the formula (3) is four is excellent since it is possible to form a uniform film on the surface of the aluminum nitride particle. The weight-average molecular weight of the organic silicone compound including the structure represented by the formula (1) is preferably 100 or more and 2000 or less, more preferably 150 or more and 1000 or less and still more preferably 180 or more and 500 or less. When the organic silicone compound including the structure represented by the formula (1) and having a weight-average molecular weight in this range is used, it is assumed that a thin and uniform film is easily formed on the surface of the aluminum nitride particle. In the formula (2), m is preferably one.
In the present specification, the weight-average molecular weight is a polystyrene-equivalent weight-average molecular weight for which gel permeation chromatography (GPC) is used and, specifically, can be measured with a combination of a column (manufactured by Showa Denko K.K, "Shodex (registered trademark) LF-804") and a differential refractive index detector (manufactured by Showa Denko K.K, "Shodex (registered trademark) RI-71S").
In the first step, the organic silicone compound including the structure represented by the formula (1) is vapor-deposited on the surfaces of the aluminum nitride particles. The vapor deposition may be performed by, for example, a gas-phase adsorption method in which the vapor of the organic silicone compound including the structure represented by the formula (1) alone or a gas mixture with an inert gas such as a nitrogen gas is vapor-deposited on the surfaces of the aluminum nitride particles placed still. In addition, the vapor of the organic silicone compound including the structure represented by the formula (1) alone or a gas mixture with an inert gas such as a nitrogen gas may be adsorbed to the particle surfaces in a state where the aluminum nitride particles have been stirred.
The first step is performed under a nitrogen atmosphere. The partial pressure of the organic silicone compound in the nitrogen atmosphere is $2.6 \times 10^2$ to $3.9 \times 10^3$ Pa. When the partial pressure of the organic silicone compound is $2.6 \times 10^2$ Pa or higher, an appropriate amount of the organic silicone compound is vapor-deposited on the aluminum nitride particle surfaces, and the moisture resistance can be improved. When the partial pressure is $3.9 \times 10^3$ Pa or

lower, aggregation can be suppressed by decreasing the change rate of the particle size distribution width. From such a viewpoint, the partial pressure of the organic silicone compound is preferably $3.2 \times 10^2$ to $3.9 \times 10^3$ Pa, more preferably $3.9 \times 10^2$ to $3.6 \times 10^3$ Pa and still more preferably $3.9 \times 10^2$ to $3.4 \times 10^3$ Pa.

The partial pressure of the organic silicone compound can be adjusted within the above-described range by the measurement and management of the concentration of the organic silicone compound in a reaction container, and the management of the amount of the organic silicone compound to be vaporized.

The treatment temperature depends on the boiling point of the silicone compound including the structure represented by the formula (1) or the vapor pressure and is thus not particularly limited. The temperature is preferably 30°C or higher and 200°C or lower, more preferably 40°C or higher and 150°C or lower and still more preferably 50°C or higher and 100°C or lower.

In addition, the treatment time is not particularly limited, but is preferably one to 12 hours, more preferably two to 10 hours and still more preferably three to eight hours.

Furthermore, in case of necessity, it is also possible to pressurize or depressurize the inside of the system. As a device that can be used in this case, a closed system or a device capable of easily substituting the gas in the system is preferable, and, for example, a glass container, a desiccator, a CVD device or the like can be used.

Regarding the introduction timing of the organic silicone compound including the structure represented by the formula (1), the organic silicone compound may be introduced at any stage before heating as long as the reaction amount of the organic silicone compound is held.

[Second Step]

In the present step, the aluminum nitride particles covered with the organic silicone compound obtained in the first step are heated at a temperature of 300°C or higher and lower than 1000°C, preferably 300°C or higher and 950°C or lower, more preferably 400°C or higher and 900°C or lower and still more preferably 500°C or higher and 880°C or lower. This makes it possible to form silicon-containing oxide films on the aluminum nitride particle surfaces.

In a case where this heating in the second step is performed at a low temperature, silica films are formed on the aluminum nitride particle surfaces, and silica-coated aluminum nitride particles can be produced. In addition, in a case where this heating in the second step is performed at a high temperature, films of a composite oxide of a silicon element and an aluminum element are formed on the aluminum nitride particle surfaces, and aluminum nitride particles coated with the composite oxide of a silicon element and an aluminum element can be produced. When the temperature in the second step becomes high, it is assumed that aluminum configuring the aluminum nitride particles appears on the aluminum nitride particle surfaces and thereby forms a composite oxide together silicon that is derived from the organic silicone compound, and films of the composite oxide of a silicon element and an aluminum element are formed.

In the second step, an ordinary heating furnace can be used as long as the aluminum nitride particles covered with the organic silicone compound obtained in the first step can be heated at a temperature of 300°C or higher and lower than 1000°C, preferably 300°C or higher and 950°C or lower, more preferably 400°C or higher and 900°C or lower and still more preferably 500°C or higher and 880°C or lower, that is, the aluminum nitride particles covered with the organic silicone compound obtained in the first step can be held in a temperature range of 300°C or higher and lower than 1000°C, preferably 300°C or higher and 950°C or lower, more preferably 400°C or higher and 900°C or lower and still more preferably 500°C or higher and 880°C or lower.

Silica coating means coating with a thin film containing silica as a main component. However, since there is a possibility that a plurality of inorganic composites may be present in the interfaces between coated silica and the aluminum nitride particles, in the case of analysis by time of flight secondary ion mass spectrometry (ToF-SIMS; manufactured by IONTOF Japan, "TOF. SIMS5"), there are also cases where decomposition or the like at the time of the recombination of secondary ions and ionization also overlaps and the segments of an $AlSiO_4$ ion, a SiNO ion and the like are detected at the same time as accessory components. These composite segments that are analyzed by the ToF-SIMS analysis can also be defined as partial detected objects in a case where aluminum nitride is silicated. As a rough standard, in a state where the secondary electron amount of silica is larger than other fractions, silica can be regarded as the main component.

Furthermore, as an experiment for confirming the purity of silica by increasing accuracy, the surface of a sample having a silica film formed by the same method on an aluminum nitride polycrystalline substrate is measured by an X-ray photoelectron spectroscopy (XPS; manufactured by ULVAC-PHI, Incorporated, "Quantera II"), and almost all of the sample is assumed to have a $SiO_2$ structure from the fact that the kinetic energies of Si-derived photoelectrons that are detected almost match the standard peak of silica, that is, 103.7 eV. Depending on the heating temperature, there may be cases where an organic component remains. There is a sufficient possibility that an organic siloxane component may be present in a mixed form to an extent that the effect of the present invention is not impaired.

The content of carbon atoms can be measured with a carbon/sulfur analyzer or the like for which a non-dispersive infrared absorption method with a tubular electric furnace is used. Specifically, the content of carbon atoms can be

measured using a carbon analyzer (manufactured by Horiba, Ltd., "EMIA-821").

The heating temperature (thermal treatment temperature) of the second step is 300°C or higher and lower than 1000°C, preferably 300°C or higher and 950°C or lower, more preferably 400°C or higher and 900°C or lower and still more preferably 500°C or higher and 880°C or lower. When the second step is performed within this temperature range, silicon-containing oxide films having favorable moisture resistance and thermal conductivity are formed. Specifically, when the aluminum nitride particles are heated at 300°C or higher, the moisture resistance becomes favorable probably because the silicon-containing oxide films are densified and the transmission of moisture becomes difficult. In addition, when the aluminum nitride particles are heated at lower than 1000°C, preferably 950°C or lower, more preferably 900°C or lower and still more preferably 880°C or lower, the thermal conductivity becomes favorable. On the other hand, when the aluminum nitride particles are heated at 1000°C or higher, the moisture resistance and the thermal conductivity become poor. In addition, when the heating temperature is 300°C or higher and lower than 1000°C, preferably 300°C or higher and 950°C or lower, more preferably 400°C or higher and 900°C or lower and still more preferably 500°C or higher and 880°C or lower, the silicon-containing oxide films are uniformly formed on the surfaces of the aluminum nitride particles. In addition, when the heating temperature is 300°C or higher, the silicon-containing oxide films become excellent in terms of insulating properties, and the heating temperature of lower than 1000°C, preferably 950°C or lower, more preferably 900°C or lower and still more preferably 880°C or lower is also effective in terms of the energy cost. The heating temperature is preferably 500°C or higher.

The heating time is preferably 30 minutes or longer and 12 hours or shorter, more preferably one hour or longer and 10 hours or shorter and still more preferably two hours or longer and eight hours or shorter. When the thermal treatment time is 30 minutes or longer, the decomposition product of the organic group (the alkyl group having 4 or less carbon atoms) of the organic silicone compound does not remain, and silicon-containing oxide films having an extremely small content of a carbon atom can be obtained on the aluminum nitride particle surfaces, which is preferable. In addition, the heating time is preferably set to 12 hours or shorter since it is possible to produce silicon-containing oxide-coated aluminum nitride particles with a favorable production efficiency.

The atmosphere for the thermal treatment in the second step is not particularly limited, and the thermal treatment may be performed, for example, under an inert gas atmosphere of $N_2$, Ar, He or the like, under an atmosphere containing a reducing gas such as $H_2$, CO or $CH_4$ or under an atmosphere containing an oxygen gas, for example, in the atmosphere (in the air).

In addition, in order to further enhance the moisture resistance, the first step and the second step may be further performed in order after the thermal treatment of the second step. That is, a step of performing the first step and the second step in order may be repeatedly executed.

A coating method for covering the surfaces of the aluminum nitride particles with the organic silicone compound by the gas-phase adsorption method in the first step enables the formation of thin and uniform silicon-containing oxide films compared with a coating method in which a liquid treatment is performed. Therefore, even when the step of performing the first step and the second step in order is repeated, for example, approximately twice to five times, it is possible to exhibit favorable thermal conductivity of the aluminum nitride particles.

Incidentally, regarding the moisture resistance, a positive correlation is admitted between the number of times of the step of performing the first step and the second step in order and the moisture resistance. Therefore, it is possible to freely select the number of times of the step of performing the first step and the second step in order depending on the level of moisture resistance that is required in actual uses.

For silicon-containing oxide-coated aluminum nitride particles obtained by the above-described method for producing a silicon-containing oxide-coated aluminum nitride particle of the present invention, the change rate of the particle size distribution width ($P_2$) of the silicon-containing oxide-coated aluminum nitride particles with respect to the particle size distribution width ($P_1$) of the aluminum nitride particles that is calculated by the following formula (I) is preferably 10% or less, more preferably 8% or less and still more preferably 7% or less.

[Math. 2]

$$\text{Change rate (\%) of particle size distribution width} = \left( \frac{P_2}{P_1} - 1 \right) \times 100 \qquad (\mathrm{I})$$

$$\text{Particle size distribution width } (P_1) = \frac{D90 - D10}{D50}$$

$$\text{Particle size distribution width } (P_2) = \frac{D90 - D10}{D50}$$

In the formula, in $P_1$ and $P_2$, D90 is the cumulative volume 90% particle diameter of the particles, D50 is the cumulative volume 50% particle diameter of the particles, and D10 is the cumulative volume 10% particle diameter of the particles.

The change rate of the particle size distribution width that is calculated by the formula (I) is an index showing the degree of the aggregation of the silicon-containing oxide-coated aluminum nitride particles. As the change rate becomes smaller, the aggregation of the silicon-containing oxide-coated aluminum nitride particles is further suppressed. When the change rate is 10% or less, the aggregation of the silicon-containing oxide-coated aluminum nitride particles is suppressed, and the properties of filling a variety of materials become favorable. In addition, when the aggregation of the particles does not occur often, since there is no need to perform the crushing of aggregated particles at the time of preparing a composition, the high thermal conductivity of the aluminum nitride particles is maintained, and the silicon-containing oxide-coated aluminum nitride particles become excellent in terms of moisture resistance.

The change rate of the particle size distribution width that is calculated by the formula (I) can be adjusted within the above-described range by appropriately adjusting the partial pressure of the organic silicone compound in the nitrogen atmosphere.

The silicon-containing oxide-coated aluminum nitride particles obtained by the above-described method for producing a silicon-containing oxide-coated aluminum nitride particle of the present invention maintain high thermal conductivity derived from the aluminum nitride particles and have excellent moisture resistance and thus can be widely applied as fillers in the use of heat dissipation material that are used in the electrical and electronic field and the like.

<Silicon-Containing Oxide-Coated Aluminum Nitride Particle>

A silicon-containing oxide-coated aluminum nitride particle of the present invention, that is, a silicon-containing oxide-coated aluminum nitride particle including an aluminum nitride particle and a silicon-containing oxide film that covers the surface of the aluminum nitride particle can be obtained by the method for producing a silicon-containing oxide-coated aluminum nitride particle of the present invention. Examples of the silicon-containing oxide film and "silicon-containing oxide" of the silicon-containing oxide-coated aluminum nitride particle include the above-described silica and composite oxide of a silicon element and an aluminum element. Oxides include oxides, oxynitrides, oxycarbonitrides and the like.

In the silicon-containing oxide-coated aluminum nitride particle of the present invention, the change rate of the particle size distribution width ($P_2$) of the silicon-containing oxide-coated aluminum nitride particles with respect to the particle size distribution width ($P_1$) of the aluminum nitride particles that is calculated by the following formula (I) is preferably 10% or less, more preferably 8% or less and still more preferably 7% or less.

[Math. 3]

$$\text{Change rate (\%) of particle size distribution width} = \left( \frac{P_2}{P_1} - 1 \right) \times 100 \qquad (I)$$

$$\text{Particle size distribution width } (P_1) = \frac{D90 - D10}{D50}$$

$$\text{Particle size distribution width } (P_2) = \frac{D90 - D10}{D50}$$

In the formula, in $P_1$ and $P_2$, D90 is the cumulative volume 90% particle diameter of the particles, D50 is the cumulative volume 50% particle diameter of the particles, and D10 is the cumulative volume 10% particle diameter of the particles.

When the change rate is 10% or less, the aggregation of the silicon-containing oxide-coated aluminum nitride particles is suppressed, and the properties of filling a variety of materials become favorable. In addition, the high thermal conductivity of the aluminum nitride particles is maintained, and the silicon-containing oxide-coated aluminum nitride particles become excellent in terms of moisture resistance.

When the silicon-containing oxide-coated aluminum nitride particle of the present invention is added into, for example, a hydrochloric acid aqueous solution adjusted to a pH of 4 and treated at 60°C or 85°C for two hours (that is, the silicon-containing oxide-coated aluminum nitride particle is immersed in a hydrochloric acid aqueous solution adjusted to a pH of 4 at 60°C or 85°C for two hours), it is possible to make the concentration of ammonium extracted in the hydrochloric acid aqueous solution be 10 mg/L or lower, and the moisture resistance is extremely excellent. Since a hydrolysis reaction is further accelerated in an acidic solution than in the air, an acceleration test of moisture resistance can be made possible by exposing the particle to a hydrochloric acid aqueous solution adjusted to a pH of 4. Therefore, the use of the hydrochloric acid aqueous solution having a pH of 4 makes it possible to evaluate the moisture resistance of the silicon-containing oxide-coated aluminum nitride particle, and, when the concentration of ammonium is 10 mg/L or lower, the moisture resistance can be said to be favorable. In addition, the use of the hydrochloric acid aqueous solution having a pH of 4 also makes it possible to compare chemical resistance together.

The concentration of the extracted ammonia is preferably 8 mg/L or lower, more preferably 6 mg/L or lower, still more preferably 5 mg/L or lower and particularly preferably 4 mg/L or lower.

The content of a carbon atom is preferably as low as possible from the viewpoint of moisture resistance. Here, in the above-described method for producing a silicon-containing oxide-coated aluminum nitride particle of the present invention, since the organic silicone compound having the structure represented by the formula (1) is used as a raw material, the silicon-containing oxide-coated aluminum nitride particle contains a carbon atom in many cases and contains, for example, 50 mass ppm or more, furthermore, 60 mass ppm or more of a carbon atom in some cases.

The content of a silicon atom ($\Delta$Si amount) in the silicon-containing oxide coating the silicon-containing oxide-coated aluminum nitride particle is preferably 20 to 2000 mass ppm, more preferably 30 to 1900 mass ppm and still more preferably 40 to 1850 mass ppm from the viewpoint of making the moisture resistance superior.

The $\Delta$Si amount can be measured by an ICP method and, specifically, can be measured by a method described in examples.

[Method for Producing Resin Composition]

A resin composition can be produced using the above-described silicon-containing oxide-coated aluminum nitride particle of the present invention. That is, a method for producing a resin composition in the present invention has a production step of producing silicon-containing oxide-coated aluminum nitride particles by the above-described method for producing a silicon-containing oxide-coated aluminum nitride particle of the present invention and a mixing step of mixing the silicon-containing oxide-coated aluminum nitride particles and a resin. Examples of a silicon-containing oxide film and "silicon-containing oxide" of the silicon-containing oxide-coated aluminum nitride particle include the above-described silica and composite oxide of a silicon element and an aluminum element. Oxides include oxides, oxynitrides, oxycarbonitrides and the like.

The silicon-containing oxide-coated aluminum nitride particles produced by the above-described method for producing a silicon-containing oxide-coated aluminum nitride particle of the present invention are not easily aggregated and have favorable properties of filling resin compositions, which makes it possible to easily produce the resin composition. In addition, since the silicon-containing oxide-coated aluminum nitride particles maintain the high thermal conductivity of aluminum nitride particles and have improved moisture resistance, a resin composition to be obtained by the above-described method for producing a resin composition is excellent in terms of moisture resistance and thermal conductivity.

In the mixing step, the silicon-containing oxide-coated aluminum nitride particles produced by the above-described method for producing a silicon-containing oxide-coated aluminum nitride particle and a resin are mixed together.

The resin that is mixed in the mixing step is not particularly limited, but is preferably a thermosetting resin, a thermoplastic resin or a mixture of a thermosetting resin and a thermoplastic resin since a resin composition to be obtained will have excellent heat resistance. Examples of the thermosetting resin include a silicone resin such as polydimethylsiloxane, an epoxy resin, a phenolic resin, a bismaleimide resin, a cyanate resin, a urethane resin, a (meth)acrylic resin, a vinyl ester resin, an unsaturated polyester resin, a polyvinyl alcohol acetal resin and the like, and these can be used singly or two or more thereof can be mixed together and used. Furthermore, a mixture obtained by adding a curing agent and a curing accelerator to a thermosetting resin may also be used. In particular, an epoxy resin is preferable since the heat resistance after curing, the adhesiveness and the electrical characteristics are favorable, and a silicone resin is preferably in uses where flexible adhesiveness matters.

As the silicone resin, there are an addition reaction-curable silicone resin, a condensation reaction-curable silicone resin, an organic peroxide-curable silicone resin and the like, and these can be used singly or two or more of these resins having different viscosities can be combined together and used. Particularly, in a case where a resin

composition to be obtained is used in uses where flexible adhesiveness matters, examples of the silicone resin include addition reaction-curable liquid silicone resins that do not generate a by-product, which can be a causative substance of air bubbles or the like, and a silicone resin-cured product can be obtained by reacting an organopolysiloxane having an alkenyl group, which is a base polymer, and an organopolysiloxane having a Si-H group, which is a crosslinking agent, in the presence of a curing agent at normal temperature or by heating. As specific examples of the organopolysiloxane that is the base polymer, for example, there are organopolysiloxanes having a vinyl group, an allyl group, a propenyl group, a hexenyl group or the like as the alkenyl group. Particularly, a vinyl group is preferable as the organopolysiloxane. In addition, for example, a platinum metal-based curing catalyst can be used as a curing catalyst, and an adjusted amount of the curing catalyst can be added and used to realize an intended hardness of a resin cured product.

Examples of the epoxy resin include bifunctional glycidyl ether-type epoxy resins such as a bisphenol A-type epoxy resin, a bisphenol F-type epoxy resin, a bisphenol S-type epoxy resin, a hydrogenated bisphenol A-type epoxy resin and a biphenyl-type epoxy resin; glycidyl ester-type epoxy resins such as hexahydrophthalic acid glycidyl ester and dimer acid glycidyl ester; linear aliphatic epoxy resins such as epoxidized polybutadiene and epoxidized soybean oil; heterocyclic epoxy resins such as triglycidyl isocyanurate; glycidylamine-type epoxy resins such as N,N,N',N'-tetraglycidyl-4,4'-diaminodiphenylmethane, N,N,N',N'-tetraglycidyl-1,3-benzenedi(methanamine), 4-(glycidyloxy)-N,N-diglycidylaniline, 3-(glycidyloxy)-N,N-diglycidylaniline; polyfunctional glycidyl ether-type epoxy resins such as a phenol novolac-type epoxy resin, a cresol novolac-type epoxy resin, a biphenylaralkyl-type epoxy resin, a naphthalenearalkyl-type epoxy resin, a tetrafunctional naphthalene-type epoxy resin and a triphenylmethane-type epoxy resin; and the like. The above-described epoxy resins can be used singly or two or more thereof can be mixed together and used.

In the case of using the above-described epoxy resin, a curing agent or a curing accelerator may be blended therewith. Examples of the curing agent include alicyclic acid anhydrides such as methyltetrahydrophthalic anhydride, methylhexahydrophthalic anhydride and hymic acid anhydride; aliphatic acid anhydrides such as dodecenyl succinic anhydride; aromatic acid anhydrides such as phthalic anhydride and trimellitic anhydride; bisphenols such as bisphenol A, bisphenol F and bisphenol S; phenol resins such as a phenol/formaldehyde resin, a phenol/aralkyl resin, a naphthol/aralkyl resin and a phenol-dicyclopentadiene copolymer resin; organic dihydrazides such as dicyandiamide and adipic acid dihydrazide; and the like, and examples of the curing catalyst include amines such as tris(dimethylaminomethyl)phenol, dimethylbenzylamine, 1,8-diazabicyclo(5,4,0)undecene and derivatives thereof; imidazoles such as 2-methylimidazole, 2-ethyl-4-methylimidazole, 2-phenylimidazole and derivatives thereof; and the like. These can be used singly or two or more thereof can be combined together and used.

In the mixing step, other than the silicon-containing oxide-coated aluminum nitride particles, a filler such as boron nitride, alumina, silica or zinc oxide, which is normally used, may be jointly used.

In the mixing step, the silicon-containing oxide-coated aluminum nitride particles and the filler other than the silicon-containing oxide-coated aluminum nitride particles need to be mixed together as much as a desired resin composition can be obtained.

The total content of the silicon-containing oxide-coated aluminum nitride particles and the filler other than the silicon-containing oxide-coated aluminum nitride particles in a resin composition to be obtained is preferably 50 mass% or more and 99 mass% or less, more preferably 60 mass% or more and 97 mass% or less and still more preferably 70 mass% or more and 95 mass% or less. When the total content is 50 mass% or more, favorable heat dissipation properties can be exhibited, and, when the total content is 99 mass% or less, favorable workability can be obtained at the time of using the resin composition.

In addition, the content of the silicon-containing oxide-coated aluminum nitride particles in a resin composition to be obtained is preferably 30 mass% or more and 100 mass% or less, more preferably 40 mass% or more and 100 mass% or less and still more preferably 50 mass% or more and 100 mass% or less of the total content of the silicon-containing oxide-coated aluminum nitride particles and the filler other than the silicon-containing oxide-coated aluminum nitride particles. When the total content is 30 mass% or more, favorable heat dissipation properties can be exhibited.

In the mixing step, furthermore, a plasticity imparting agent such as silicone, urethane acrylate, a butyral resin, acrylic rubber, diene-based rubber or a copolymer thereof, a silane-based coupling agent, a titanium-based coupling agent, an inorganic ion scavenger, a pigment, a dye, a diluent, a solvent or the like can be appropriately added as necessary.

A mixing method in the mixing step is not particularly limited, and examples thereof include methods in which the silicon-containing oxide-coated aluminum nitride particles, a resin, other additives and the like are heated, mixed, dissolved and kneaded as necessary all at once or in parts with one or an appropriate combination of dispersion/dissolution devices such as a mortar machine, a planetary mixer, a planetary centrifugal mixer, a kneader and a roll mill.

In addition, an obtained resin composition can also be molded in a sheet shape and reacted as necessary to produce a heat dissipation sheet. The above-described resin composition and heat dissipation sheet can be preferably used in the adhesion uses and the like of semiconductor power devices, power modules and the like.

Examples of a method for producing the heat dissipation sheet include a method in which the resin composition is molded with a compression press or the like in a manner that both surfaces are sandwiched with base material films,

a method in which the resin composition is applied onto a base material film using a device such as a bar coater, screen printing, a blade coater, a die coater or a comma coater and the like. Furthermore, for the heat dissipation sheet after molding and application, it is also possible to add a step of removing a solvent, B-staging by heating or the like or a treatment step of complete curing or the like. As described above, a variety of forms of heat dissipation sheets can be obtained depending on steps, and it becomes possible to widely deal with intended use fields or methods used.

It is possible to use a solvent to improve workability at the time of applying or forming the resin composition on the base material film. The solvent is not particularly limited, and it is possible to use one or a mixture of two or more of a ketone-based solvent such as acetone, methyl ethyl ketone, methyl isobutyl ketone, cyclopentanone or cyclohexanone; an ether-based solvent such as 1,4-dioxane, tetrahydrofuran or diglyme; a glycol ether-based solvent such as methyl cellosolve, ethyl cellosolve, propylene glycol monomethyl ether, propylene glycol monoethyl ether, propylene glycol monobutyl ether, propylene glycol monomethyl ether acetate, propylene glycol monoethyl ether acetate or diethylene glycol methyl ethyl ether; other benzyl alcohol; N-methylpyrrolidone; γ-butyrolactone; ethyl acetate; N,N-dimethylformamide; and the like.

In order to form the resin composition in a sheet shape, sheet formability that holds the sheet shape becomes necessary. In order to obtain sheet formability, it is possible to add a high-molecular-weight component to the resin composition. Examples thereof include a phenoxy resin, a polyimide resin, a polyamide resin, a polycarbodiimide resin, a cyanate ester resin, a (meth)acrylic resin, a polyester resin, a polyethylene resin, a polyether sulfone resin, a polyetherimide resin, a polyvinyl acetal resin, a urethane resin, acrylic rubber and the like. Among these, from the viewpoint of excellent heat resistance and film formability, a phenoxy resin, a polyimide resin, a (meth)acrylic resin, acrylic rubber, a cyanate ester resin, a polycarbodiimide resin and the like are preferable, and a phenoxy resin, a polyimide resin, a (meth)acrylic resin and acrylic rubber are more preferable. These can be used singly or as a mixture or copolymer of two or more thereof.

The weight-average molecular weight of the high-molecular-weight component is preferably 10000 or more and 100000 or less and more preferably 20000 or more and 50000 or less.

A favorable sheet shape having favorable handleability can be held by adding a component having a weight-average molecular weight within the above-described range.

The amount of the high-molecular-weight component added is not particularly limited, but is preferably 0.1 mass% or more and 20 mass% or less, more preferably 1 mass% or more and 15 mass% or less and still more preferably 2 mass% or more and 10 mass% or less with respect to the resin composition in order to hold the sheet physical properties. When 0.1 mass% or more and 20 mass% or less of the high-molecular-weight component is added, the handleability is also favorable, and a favorable sheet or film is formed.

The base material film that is used during the production of the heat dissipation sheet is not particularly limited as long as base material films are capable of withstanding step conditions for heating, drying and the like during production. Examples thereof include films made of a polyester having an aromatic ring such as polyethylene terephthalate (PET) or polybutylene terephthalate (PBT), a polypropylene film, a polyimide film, a polyetherimide film and the like. The above-described film may be a multilayer film in which two or more films are combined together or may be a film having a surface treated with a silicone-based or other mold release agent. The thickness of the base material film is preferably 10 μm or more and 100 μm or less.

The thickness of the heat dissipation sheet formed on the base material film is preferably 20 μm or more and 500 μm or less and more preferably 50 μm or more and 200 μm or less. When the thickness of the heat dissipation sheet is 20 μm or more, a heat dissipation sheet having a uniform composition can be obtained, and, when the thickness is 500 μm or less, favorable heat dissipation properties can be obtained.

[Examples]

Next, the present invention will be specifically described using examples, but the present invention is not limited to these examples.

<Methods for Measuring and Calculating Physical Properties>

[Cumulative Volume 50% Particle Diameter (D50)]

The cumulative volume 50% particle diameter (D50) was obtained from a particle diameter at which the cumulative value reached 50% in a particle size distribution measured using a laser diffraction and scattering-type particle size distribution analyzer (manufactured by MicrotracBEL Corporation, "MICROTRAC MT3300EX2").

[Particle Size Distribution Width]

The cumulative volume 90% particle diameter (D90) and the cumulative volume 10% particle diameter (D10) were obtained using the laser diffraction and scattering-type particle size distribution analyzer (manufactured by MicrotracBEL Corporation, "MICROTRAC MT3300EX2") in the same manner as in the measurement of the cumulative volume 50% particle diameter (D50). The particle size distribution width ($P_1$) of aluminum nitride particles and the particle size distribution width ($P_2$) of silicon-containing oxide-coated aluminum nitride particles were calculated by the following formula using the obtained D10, D50 and D90.

[Math. 4]

$$\text{Particle size distribution width } (P_1) = \frac{D90 - D10}{D50}$$

$$\text{Particle size distribution width } (P_2) = \frac{D90 - D10}{D50}$$

[Change Rate of Particle Size Distribution Width]

The change rate of the particle size distribution width ($P_2$) of the silicon-containing oxide-coated aluminum nitride particles with respect to the particle size distribution width ($P_1$) of the aluminum nitride particles was calculated by the following formula (I) from $P_1$ and $P_2$ obtained in the [particle size distribution width].
[Math. 5]

$$\text{Change rate (\%) of particle size distribution width} = \left(\frac{P_2}{P_1} - 1\right) \times 100 \qquad (I)$$

$$\text{Particle size distribution width } (P_1) = \frac{D90 - D10}{D50}$$

$$\text{Particle size distribution width } (P_2) = \frac{D90 - D10}{D50}$$

[Evaluation of Moisture Resistance of Particle]

Regarding the moisture resistance of particles such as the silicon-containing oxide-coated aluminum nitride particles, 17 g of a hydrochloric acid aqueous solution adjusted to a pH of 4 and 3 g of the silicon-containing oxide-coated aluminum nitride particles were added and sealed in a 50 mL sample tube, then, shaken with a shaking-type constant-temperature bath under conditions of 85°C, 80 rpm and two hours, placed still and then cooled to room temperature (25°C), and the ammonia concentration in a supernatant was measured using an ammonia electrode (manufactured by Horiba, Ltd., "5002A") under a temperature condition of 25°C. The measurement results are shown in the "moisture-resistant ammonia concentration" column in the table.

[Method for Calculating Content of Silicon Atom (Si Amount) of Silicon-Containing Oxide-Coated Aluminum Nitride Particles]

The content of a silicon atom (Si amount) of the silicon-containing oxide-coated aluminum nitride particles was

calculated by the following procedure.

(1) 10 mL of a solution obtained by mixing 97 mass% sulfuric acid (super special grade, manufactured by Wako Pure Chemical Industries, Ltd.) and ion exchange water at a volume ratio of 1:2 and 0.5 g of a silicon-containing oxide-coated aluminum nitride particle sample were added into 20 mL TEFLON (registered trademark) containers.
(2) TEFLON (registered trademark) container as a whole was put into a stainless steel pressure-resistant container and maintained at 230°C for 15 hours, and the added silicon-containing oxide-coated aluminum nitride particle sample was dissolved.
(3) The solution mixed in (1) was taken out, the concentration of a silicon atom was measured using ICP (manufactured by Shimadzu Corporation, "ICPS-75101"), and the content (unit: mass ppm) of a silicon atom (Si amount) of the silicon-containing oxide-coated aluminum nitride particles was calculated from this measured concentration of a silicon atom.

[Method for Calculating Content of Silicon Atom (ΔSi Amount) of Silicon-Containing Oxide Coating Silicon-Containing Oxide-Coated Aluminum Nitride Particles]

The content (unit: mass ppm) of a silicon atom (ΔSi amount) of the silicon-containing oxide coating the silicon-containing oxide-coated aluminum nitride particles was calculated by subtracting the silicon content of an aluminum nitride raw material alone calculated by the above-described calculation method from the content of a silicon atom (Si amount) of the silicon-containing oxide-coated aluminum nitride particles calculated by the same method.

[Thermal Conductivity of Resin Molded Article]

The thermal conductivities (unit: W/m·K) were measured by a hot disc method in which a thermophysical property-measuring instrument (manufactured by Kyoto Electronics Manufacturing Co., Ltd., "TPS 2500 S") was used according to ISO 22007-2: 2015 from a resin molded article test piece fabricated by the following method and a resin molded article test piece fabricated in each of the examples and comparative examples.

(Production of Resin Molded Article)

50 mass% of each of Liquid A and liquid B of a polydimethylsiloxane gel (manufactured by Dow Toray Co., Ltd., "DOWSIL™ EG-3100") with respect to overall 100 parts by mass was weighed in a container, a variety of fillers were weighed so that the compositions (parts by mass) became as shown in Table 1, and the components were stirred and mixed with a planetary centrifugal mixer (manufactured by Thinky Corporation, "ARV-310P") at a rotation speed of 1000 rpm for 30 seconds while being depressurized. Mixtures were cooled to room temperature (25°C) once. Each of compositions 1 to 6 was placed on a PET base material, sandwiched with another PET base material, stretched to a thickness of 2 mm with a rolling roll and then cured by a thermal treatment at 100°C for 15 minutes, thereby obtaining resin molded article test pieces 1 to 6.

The detail of each component in Table 1 will be described below.

· Aluminum nitride particle A: Manufactured by Toyo Aluminium K.K., "N01P"; D50 = 1.3 μm
· Aluminum nitride particle B: Manufactured by Toyo Aluminium K.K., "JM"; D50 = 2.8 μm
· Aluminum nitride particle C: Manufactured by Toyo Aluminium K.K., "TFZ-N15P"; D50 = 17.0 μm
· Aluminum nitride particle D: Manufactured by Furukawa Denshi Co., Ltd., "FAN-f30-Al"; D50 = 32.8 μm
· Aluminum nitride particle E: Manufactured by Furukawa Denshi Co., Ltd., "FAN-f50-Al"; D50 = 45.5 μm
· Aluminum nitride particle F: Manufactured by Furukawa Denshi Co., Ltd., "FAN-f80-Al"; D50 = 77.6 μm
· AA-3: Advanced alumina (manufactured by Sumitomo Chemical Co., Ltd., "SUMICORUNDUM (registered trademark)"; D50 = 3 μm)
· AKP-30: High-purity alumina (manufactured by Sumitomo Chemical Co., Ltd., "AKP-30"; D50 = 0.3 μm)
· EG-3100 (A): Liquid A of polydimethylsiloxane gel (manufactured by Dow Toray Co., Ltd., "DOWSIL™ EG-3100") (mixture of vinyl oil and platinum catalyst, viscosity: 420 mPa·s)
· EG-3100 (B): Liquid B of polydimethylsiloxane gel (manufactured by Dow Toray Co., Ltd., "DOWSIL™ EG-3100") (mixture of vinyl oil and crosslinking agent, viscosity: 320 mPa·s)

Table 1

| Unit: parts by mass | Composition 1 | Composition 2 | Composition 3 | Composition 4 | Composition 5 | Composition 6 |
|---|---|---|---|---|---|---|
| Aluminum nitride particle A | 400 | - | - | - | - | - |
| Aluminum nitride particle B | - | 400 | - | - | - | - |
| Aluminum nitride particle C | - | - | 800 | - | - | - |
| Aluminum nitride particle D | - | - | - | 800 | - | - |
| Aluminum nitride particle E | - | - | - | - | 800 | - |
| Aluminum nitride particle F | - | - | - | - | - | 800 |
| AA-3 | - | - | 300 | 300 | 300 | 300 |
| AKP-30 | 160 | 160 | 400 | 400 | 400 | 400 |
| EG-3100(A) | 50 | 50 | 50 | 50 | 50 | 50 |
| EG-3100(B) | 50 | 50 | 50 | 50 | 50 | 50 |

(Example 1)

[Production of Silica-Coated Aluminum Nitride Particles]

In a first step, the surfaces of the aluminum nitride particles were coated using a reaction device based on a large oven having a reaction vessel inner capacity of 250 L. Fifty grams of each of aluminum nitride particles A, aluminum nitride particles B, aluminum nitride particles C, aluminum nitride particles D, aluminum nitride particles E and aluminum nitride particles F was uniformly spread in a separate stainless steel tray and left still in the reaction vessel. Next, 84 g of an organic silicone compound A for which n was four in a formula (3) (cyclic methyl hydrogen siloxane tetramer; manufactured by Tokyo Chemical Industry Co., Ltd., "D4H") was equally divided and put into four glass Petri dishes (inner diameter of 150 mm and height of 20 mm, 21 g of the organic silicone compound A in each Petri dish) and placed still in the reaction vessel, and the reaction vessel was closed. Since a reaction generates a hydrogen gas, the inside of the reaction vessel was vacuumed in advance until the oxygen concentration reached 8 vol% or less, which is the explosion limit, then, a dry nitrogen gas was made to flow into the reaction vessel, and the inside pressure was returned to normal pressure (0.1 MPa). After that, the reaction vessel was heated to 80°C to vaporize the organic silicone compound A, and a reaction was performed for 7.5 hours from when the temperature became stable. The partial pressure of the organic silicone compound A in the nitrogen atmosphere inside the reaction vessel at the time of the beginning of the first step was $3.3 \times 10^3$ Pa.

After the first step was ended, samples A to F removed from the reaction vessel were each put into an alumina crucible, and a thermal treatment of a second step was performed in the atmosphere on the samples A to C under conditions of 700°C for three hours and on the samples D to F under conditions of 850°C for six hours, thereby obtaining silica-coated aluminum nitride particles 1-A to 1-F as silicon-containing oxide-coated aluminum nitride particles.

In addition, compositions 1-A to 1-F were prepared in the same manner as in the (production of resin molded article) except that, in the (production of resin molded article), the aluminum nitride particles A to F in Table 1 were changed to the silica-coated aluminum nitride particles 1-A to 1-F, respectively, and, furthermore, resin molded article test pieces 1-A to 1-F were obtained.

(Example 2)

Silica-coated aluminum nitride particles 2-A to 2-F were obtained in the same manner as in Example 1 except that, in Example 1, the partial pressure of the organic silicone compound A in the nitrogen atmosphere in the first step was changed from $3.3 \times 10^3$ Pa to $1.6 \times 10^3$ Pa. In addition, compositions 2-A to 2-F were prepared in the same manner as in the (production of resin molded article) except that, in the (production of resin molded article), the aluminum nitride particles A to F in Table 1 were changed to the silica-coated aluminum nitride particles 2-A to 2-F, respectively, and, furthermore, resin molded article test pieces 2-A to 2-F were obtained.

(Example 3)

Silica-coated aluminum nitride particles 3-A to 3-F were obtained in the same manner as in Example 1 except that, in Example 1, the partial pressure of the organic silicone compound A in the nitrogen atmosphere in the first step was changed from $3.3 \times 10^3$ Pa to $8.1 \times 10^2$ Pa. In addition, compositions 3-A to 3-F were prepared in the same manner as in the (production of resin molded article) except that, in the (production of resin molded article), the aluminum nitride particles A to F in Table 1 were changed to the silica-coated aluminum nitride particles 3-A to 3-F, respectively, and, furthermore, resin molded article test pieces 3-A to 3-F were obtained.

(Example 4)

Silica-coated aluminum nitride particles 4-A to 4-F were obtained in the same manner as in Example 1 except that, in Example 1, the partial pressure of the organic silicone compound A in the nitrogen atmosphere in the first step was changed from $3.3 \times 10^3$ Pa to $4.1 \times 10^2$ Pa. In addition, compositions 4-A to 4-F were prepared in the same manner as in the (production of resin molded article) except that, in the (production of resin molded article), the aluminum nitride particles A to F in Table 1 were changed to the silica-coated aluminum nitride particles 4-A to 4-F, respectively, and, furthermore, resin molded article test pieces 4-A to 4-F were obtained.

(Comparative Example 1)

Silica-coated aluminum nitride particles 5-A to 5-F were obtained in the same manner as in Example 1 except that, in Example 1, the partial pressure of the organic silicone compound A in the nitrogen atmosphere in the first step was changed from $3.3 \times 10^3$ Pa to $1.32 \times 10^4$ Pa. In addition, compositions 5-A to 5-F were prepared in the same manner as in the (production of resin molded article) except that, in the (production of resin molded article), the aluminum nitride particles A to F in Table 1 were changed to the silica-coated aluminum nitride particles 5-A to 5-F, respectively, and, furthermore, resin molded article test pieces 5-A to 5-F were obtained.

In addition, the obtained silica-coated aluminum nitride particles 5-A and 5-B were each stirred and mixed with a planetary centrifugal mixer (manufactured by Thinky Corporation, "ARV-310P") at a rotation speed of 2000 rpm for 30 seconds while being depressurized. Mixtures were cooled to room temperature (25°C) once. This was repeated a plurality of times, particle size distributions were confirmed by appropriate sample, and then the particles were mechanochemically crushed repeatedly until the change rates of the particle size distribution widths reached 10% or less, thereby obtaining silica-coated aluminum nitride particles 5-A1 and 5-B1.

(Comparative Example 2)

Silica-coated aluminum nitride particles 6-A to 6-F were obtained in the same manner as in Example 1 except that, in Example 1, the partial pressure of the organic silicone compound A in the nitrogen atmosphere in the first step was changed from $3.3 \times 10^3$ Pa to $2.06 \times 10^2$ Pa. In addition, compositions 6-A to 6-F were prepared in the same manner as in the (production of resin molded article) except that, in the (production of resin molded article), the aluminum nitride particles A to F in Table 1 were changed to the silica-coated aluminum nitride particles 6-A to 6-F, respectively, and, furthermore, resin molded article test pieces 6-A to 6-F were obtained.

Table 2

| | Unit | Aluminum nitride particle | | | | | |
|---|---|---|---|---|---|---|---|
| | | A | B | C | D | E | F |
| Cumulative volume 50% particle diameter (D50) | μm | 1.3 | 2.8 | 17.0 | 32.8 | 45.5 | 77.6 |

(continued)

| | | Unit | Aluminum nitride particle | | | | | |
|---|---|---|---|---|---|---|---|---|
| | | | A | B | C | D | E | F |
| Particle size distribution width | | - | 1.81 | 1.77 | 1.40 | 0.84 | 1.02 | 1.85 |
| Moisture-resistant ammonia concentration | 85°C | mg/L | 100000 or higher | 100000 or higher | 10000 or higher | 10000 or higher | 10000 or higher | 10000 or higher |
| Si amount | Original amount | mass ppm | 69 | 62 | 141 | 42 | 35 | 48 |
| Thermal conductivity of resin molded article | | W/m.K | 1.9 | 2.5 | 6.8 | 6.7 | 6.6 | 7.2 |

Table 3

| | | Unit | Example 1 | | | | | | Example 2 | | | | | |
|---|---|---|---|---|---|---|---|---|---|---|---|---|---|---|
| | | | Silica-coated aluminum nitride | | | | jartide | | Silica-coated aluminum nitride | | | | particle | |
| | | | 1-A | 1-B | 1-C | 1-D | 1-E | 1-F | 2-A | 2-B | 2-C | 2-D | 2-E | 2-F |
| Partial pressure of organic silicone compound A | | Pa | $3.3\times10^3$ | $3.3\times10^3$ | $3.3\times10^3$ | $3.3\times10^3$ | $3.3\times10^3$ | $3.3\times10^3$ | $1.6\times10^3$ | $1.6\times10^3$ | $1.6\times10^3$ | $1.6\times10^3$ | $1.6\times10^3$ | $1.6\times10^3$ |
| Post crushing | | - | Not performed | Not performed | Not performed | Not performed | Not performed | Not performed | Not performed | Not performed | Not performed | Not performed | Not performed | Not performed |
| Cumulative volume 50% particle diameter (D50) | | μm | 1.3 | 2.7 | 18.1 | 33.9 | 45.1 | 76.0 | 1.2 | 2.7 | 17.8 | 32.2 | 44.5 | 74.3 |
| Particle size distribution width | | - | 2.0 | 1.9 | 1.5 | 0.9 | 1.1 | 1.9 | 1.9 | 1.9 | 1.5 | 0.8 | 1.0 | 1.9 |
| Change rate of particle size distribution width | | % | 10 | 10 | 8 | 7 | 9 | 5 | 5 | 6 | 8 | 1 | 0 | 4 |
| Moisture-resistant ammonia concentration | 85°C | mg/L | 1 | 1 | 2 | 1 | 2 | 2 | 2 | 1 | 2 | 2 | 2 | 2 |
| ΔSi amount | | mass ppm | 1830 | 1122 | 182 | 79 | 79 | 48 | 1301 | 918 | 179 | 116 | 113 | 94 |
| Thermal conductivity of resin molded article | | W/m.K | 2.0 | 2.6 | 7.1 | 7.2 | 7.3 | 7.8 | 2.0 | 2.5 | 7.2 | 7.2 | 7.2 | 7.7 |
| | | | | | | | | | | | | | | |
| | | Unit | Example 3 | | | | | | Example 4 | | | | | |
| | | | Silica-coated aluminum nitride | | | | particle | | Silica-coated aluminum nitride | | | | particle | |
| | | | 3-A | 3-B | 3-C | 3-D | 3-E | 3-F | 4-A | 4-B | 4-C | 4-D | 4-E | 4-F |
| Partial pressure of organic silicone compound A | | Pa | $8.1\times10^2$ | $8.1\times10^2$ | $8.1\times10^2$ | $8.1\times10^2$ | $8.1\times10^2$ | $8.1\times10^2$ | $4.1\times10^2$ | $4.1\times10^2$ | $4.1\times10^2$ | $4.1\times10^2$ | $4.1\times10^2$ | $4.1\times10^2$ |

(continued)

| | | Unit | Example 3 | | | | | | Example 4 | | | | | |
|---|---|---|---|---|---|---|---|---|---|---|---|---|---|---|
| | | | Silica-coated aluminum nitride particle | | | | | | Silica-coated aluminum nitride particle | | | | | |
| | | | 3-A | 3-B | 3-C | 3-D | 3-E | 3-F | 4-A | 4-B | 4-C | 4-D | 4-E | 4-F |
| Post crushing | | - | Not performed | Not performed | Not performed | Not performed | Not performed | Not performed | Not performed | Not performed | Not performed | Not performed | Not performed | Not performed |
| Cumulative volume 50% particle diameter (D50) | | μm | 1.1 | 2.6 | 17.6 | 32.9 | 43.2 | 74.8 | 1.3 | 2.7 | 17.8 | 33.7 | 44.3 | 76.1 |
| Particle size distribution width | | - | 1.9 | 2.1 | 1.5 | 0.9 | 1.1 | 2.0 | 1.7 | 1.9 | 1.4 | 0.8 | 1.0 | 1.9 |
| Change rate of particle size distribution width | | % | 7 | 4 | 0 | -4 | -3 | -3 | -5 | 3 | 0 | 0 | -1 | 2 |
| Moisture-resistant ammonia concentration | 85°C | mg/L | 1 | 1 | 2 | 1 | 2 | 1 | 3 | 3 | 3 | 2 | 4 | 3 |
| ΔSi amount | | mass ppm | 978 | 700 | 179 | 73 | 77 | 46 | 750 | 598 | 142 | 67 | 63 | 44 |
| Thermal conductivity of resin molded article | | W/m·K | 2.0 | 2.5 | 7.2 | 7.1 | 7.2 | 7.7 | 2.0 | 2.5 | 7.2 | 7.2 | 7.2 | 7.7 |

Table 4

| | Unit | Comparative Example 1 | | | | | | | | Comparative Example 2 | | | | | |
|---|---|---|---|---|---|---|---|---|---|---|---|---|---|---|---|
| | | Silica-coated aluminum nitride particle | | | | | | | | Silica-coated aluminum nitride particle | | | | | |
| | | 5-A | 5-A1 | 5-B | 5-B1 | 5-C | 5-D | 5-E | 5-F | 6-A | 6-B | 6-C | 6-D | 6-E | 6-F |
| Partial pressure of organic silicone compound A | Pa | $1.32\times10^4$ | $1.32\times10^4$ | $1.32\times10^4$ | $1.32\times10^4$ | $1.32\times10^4$ | $1.32\times10^4$ | $1.32\times10^4$ | $1.32\times10^4$ | $2.06\times10^2$ | $2.06\times10^2$ | $2.06\times10^2$ | $2.06\times10^2$ | $2.06\times10^2$ | $2.06\times10^2$ |
| Post crushing | - | Not performed | Performed | Not performed | Performed | Not performed | Not performed | Not performed | Not performed | Not performed | Not performed | Not performed | Not performed | Not performed | Not performed |
| Cumulative volume 50% particle diameter (D50) | μm | 2.4 | 1.3 | 3.0 | 2.6 | 18.4 | 33.6 | 44.8 | 79.1 | 1.3 | 2.6 | 17.3 | 33.8 | 44.3 | 76.1 |
| Particle size distribution width | - | 2.3 | 2.1 | 2.0 | 1.9 | 1.5 | 0.9 | 1.1 | 2.0 | 1.7 | 1.8 | 1.4 | 0.8 | 1.0 | 1.9 |
| Change rate of particle size distribution width | % | 25 | 9 | 15 | 8 | 11 | 14 | 12 | 11 | -4 | 3 | -1 | -2 | -1 | 2 |
| Moisture-resistant ammonia concentration 85°C | mg/L | 2 | 22 | 1 | 17 | 2 | 1 | 2 | 2 | 13 | 16 | 21 | 18 | 24 | 21 |
| ΔSi amount | mass ppm | 2315 | 2298 | 1483 | 1501 | 237 | 128 | 116 | 96 | 618 | 538 | 119 | 58 | 57 | 37 |
| Thermal conductivity of resin molded article | W/m·K | 2.0 | 2.0 | 2.5 | 2.4 | 7.2 | 7.2 | 7.2 | 7.7 | 2.0 | 2.4 | 7.1 | 7.2 | 7.1 | 7.6 |

It is found that, in Examples 1 to 4, the partial pressures of the organic silicone compound in the nitrogen atmosphere in the first step of the method for producing a silicon-containing oxide-coated aluminum nitride particle are set with a range regulated by Claim 1, whereby it is possible to make the change rates of the particle size distribution widths to be 10% or less and silicon-containing oxide-coated aluminum nitride particles that are not easily aggregated can be obtained. In addition, the silicon-containing oxide-coated aluminum nitride particles of Examples 1 to 4 have high thermal conductivity and excellent moisture resistance.

On the other hand, in Comparative Example 1 where the partial pressure of the organic silicone compound in the nitrogen atmosphere is $1.32 \times 10^4$ Pa which is higher than the above-described range, it can be said that the change rate of the particle size distribution width is larger than 10% and the obtained silicon-containing oxide-coated aluminum nitride particles have been aggregated. In addition, when the particles are crushed, the change rate of the particle size distribution width decreases, but the moisture resistance deteriorates (refer to 5-A1 and 5-B1). In addition, in Comparative Example 2 where the partial pressure of the organic silicone compound in the nitrogen atmosphere is $2.06 \times 10^2$ Pa which is lower than the above-described range, the moisture resistance is low.

## Claims

**1.** A method for producing a silicon-containing oxide-coated aluminum nitride particle comprising an aluminum nitride particle and a silicon-containing oxide film that covers a surface of the aluminum nitride particle, the method comprising:

a first step of vapor-depositing an organic silicone compound comprising a structure represented by the following formula (1) on the surface of the aluminum nitride particle to obtain the aluminum nitride particle covered with the organic silicone compound; and
a second step of heating the aluminum nitride particle covered with the organic silicone compound at a temperature of 300°C or higher and lower than 1000°C,
wherein the first step is performed under a nitrogen atmosphere, and a partial pressure of the organic silicone compound in the nitrogen atmosphere is $2.6 \times 10^2$ to $3.9 \times 10^3$ Pa,

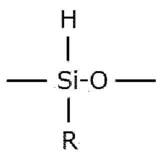

· · · (1)

wherein, in the formula (1), R is an alkyl group having 1 to 4 carbon atoms.

**2.** The method for producing a silicon-containing oxide-coated aluminum nitride particle according to Claim 1, wherein a change rate of a particle size distribution width ($P_2$) of the silicon-containing oxide-coated aluminum nitride particle with respect to a particle size distribution width ($P_1$) of the aluminum nitride particle that is calculated by the following formula (I) is 10% or less,
[Math. 1]

$$\text{Change rate (\%) of particle size distribution width} = \left( \frac{P_2}{P_1} - 1 \right) \times 100 \qquad (I)$$

$$\text{Particle size distribution width } (P_1) = \frac{D90 - D10}{D50}$$

$$\text{Particle size distribution width } (P_2) = \frac{D90 - D10}{D50}$$

wherein, in $P_1$ and $P_2$, D90 is a cumulative volume 90% particle diameter of the particle, D50 is a cumulative volume 50% particle diameter of the particle, and D10 is a cumulative volume 10% particle diameter of the particle.

3. The method for producing a silicon-containing oxide-coated aluminum nitride particle according to Claim 1 or 2, wherein the first step is performed by a gas-phase adsorption method.

4. The method for producing a silicon-containing oxide-coated aluminum nitride particle according to Claim 1 or 2, wherein the organic silicone compound comprising the structure represented by the formula (1) comprises at least one of a compound represented by the following formula (2) and a compound represented by the following formula (3),

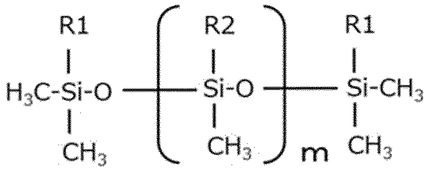 · · · (2)

wherein, in the formula (2), R1 and R2 are each independently a hydrogen atom or a methyl group, at least one of R1 and R2 is a hydrogen atom, and m is an integer of 0 to 10,

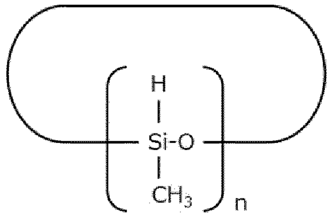 · · · (3)

wherein, in the formula (3), n is an integer of 3 to 6.

5. The method for producing a silicon-containing oxide-coated aluminum nitride particle according to Claim 1 or 2, wherein the first step is performed under a temperature condition of 30°C to 200°C.

## INTERNATIONAL SEARCH REPORT

International application No.
**PCT/JP2023/024097**

**A. CLASSIFICATION OF SUBJECT MATTER**

***C01B 21/072***(2006.01)i; ***C08K 9/06***(2006.01)i
FI: C01B21/072 R; C08K9/06

According to International Patent Classification (IPC) or to both national classification and IPC

**B. FIELDS SEARCHED**

Minimum documentation searched (classification system followed by classification symbols)

C01B21/072; C08K3/00-13/08;C08L1/00-101/14;C23C14/00-14/58

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-75435 A (SHOWA DENKO K.K.) 20 May 2021 (2021-05-20) entire text | 1-5 |
| A | JP 2020-193141 A (SHOWA DENKO K.K.) 03 December 2020 (2020-12-03) entire text | 1-5 |
| A | WO 2019/235234 A1 (SHOWA DENKO K.K.) 12 December 2019 (2019-12-12) entire text | 1-5 |
| A | JP 11-116213 A (TOSHIBA CERAMICS CO., LTD.) 27 April 1999 (1999-04-27) entire text | 1-5 |
| A | JP 2001-19575 A (KIN, Genji) 23 January 2001 (2001-01-23) entire text | 1-5 |
| A | JP 2005-104765 A (DENKI KAGAKU KOGYO KK) 21 April 2005 (2005-04-21) entire text | 1-5 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/024097**

**C. DOCUMENTS CONSIDERED TO BE RELEVANT**

| Category* | Citation of document, with indication, where appropriate, of the relevant passages | Relevant to claim No. |
|---|---|---|
| A | JP 4-321506 A (MATSUSHITA ELECTRIC WORKS LTD.) 11 November 1992 (1992-11-11) entire text | 1-5 |
| A | JP 7-507760 A (THE DOW CHEMICAL COMPANY) 31 August 1995 (1995-08-31) entire text | 1-5 |

Form PCT/ISA/210 (second sheet) (January 2015)

**INTERNATIONAL SEARCH REPORT**
**Information on patent family members**

International application No.
**PCT/JP2023/024097**

| Patent document cited in search report | Publication date (day/month/year) | Patent family member(s) | Publication date (day/month/year) |
|---|---|---|---|
| JP 2021-75435 A | 20 May 2021 | US 2022-0135805 A1<br>entire text<br>EP 003911598 A1<br>entire text<br>CN 113474411 A | |
| JP 2020-193141 A | 03 December 2020 | US 2021-0309861 A1<br>entire text<br>EP 003842383 A1<br>entire text<br>CN 112585087 A | |
| WO 2019/235234 A1 | 12 December 2019 | US 2021-0238465 A1<br>entire text<br>EP 003805152 A1<br>entire text<br>CN 112166086 A | |
| JP 11-116213 A | 27 April 1999 | (Family: none) | |
| JP 2001-19575 A | 23 January 2001 | KR 10-2001-0002267 A<br>entire text | |
| JP 2005-104765 A | 21 April 2005 | (Family: none) | |
| JP 4-321506 A | 11 November 1992 | (Family: none) | |
| JP 7-507760 A | 31 August 1995 | US 005234712 A1<br>entire text<br>EP 000644863 A1<br>entire text<br>KR 10-1995-0701892 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020040309 A
- JP 2021075435 A